## Europäisches Patentamt
## European Patent Office
## Office européen des brevets

(19)

(11) Veröffentlichungsnummer: **0 094 447**
**B1**

(12) **EUROPÄISCHE PATENTSCHRIFT**

(45) Veröffentlichungstag der Patentschrift:
**02.04.86**

(51) Int. Cl.⁴: **C 02 F 1/00, B 01 D 3/34**

(21) Anmeldenummer: **82104396.5**

(22) Anmeldetag: **19.05.82**

(54) **Verfahren und Vorrichtung zum Verdampfen von Flüssigkeiten aus einem Flüssigkeitsgemisch.**

(43) Veröffentlichungstag der Anmeldung:
**23.11.83 Patentblatt 83/47**

(45) Bekanntmachung des Hinweises auf die Patenterteilung:
**02.04.86 Patentblatt 86/14**

(84) Benannte Vertragsstaaten:
**AT CH FR GB IT LI**

(56) Entgegenhaltungen:
**AT - B - 64 931**

(73) Patentinhaber: **IEG Industrie-Engineering GmbH, Bahnhofstrasse 2, D-7410 Reutlingen (DE)**

(72) Erfinder: **Bernhardt, Bruno, Goerdelerstrasse 2/113, D-7410 Reutlingen (DE)**

(74) Vertreter: **Möbus, Rudolf, Dipl.-Ing., Hindenburgstrasse 65, D-7410 Reutlingen (DE)**

ACTORUM AG

## Beschreibung

Die Erfindung betrifft ein Verfahren und eine Vorrichtung zum Einbringen eines Gases in ein Flüssigkeitsgemisch unter Bildung von durch eine Gasschicht voneinander getrennten bewegten Flüssigkeitsbereichen.

Ein solches Verfahren ist durch die EP-A Nr. 15050 bekannt. Sie betrifft ein Verfahren und eine Vorrichtung, mit welchen Luft oder ein anderes Gas mittels eines in einem Flüssigkeitsgemisch, insbesondere Abwasser, rotierenden, in dem Flüssigkeitsgemisch eine Vorschubbewegung erzeugenden Hohlflügel-Propellers in das Flüssigkeitsgemisch eingebracht wird. Dabei entsteht eine Druckdifferenz zwischen der Flüssigkeit, die über die Oberseite und der Flüssigkeit, die über die Rückseite der Hohlflügel des Propellers fliesst und das Einsaugen des Gases begünstigt, wobei sich theoretisch auch eine Gasschicht zwischen den Grenzschichten der beiden Flüssigkeitsströmungen ergeben kann. Bei dem bekannten Verfahren ist jedoch vorgesehen, dass die Luft bereits als Luftblasenstrom aus den Öffnungen der Hohlflügel austritt.

Das bekannte Verfahren ist zwar geeignet, eine grössere Menge Luft in ein Flüssigkeitsgemisch einzumengen. Es entstehen bei der Propellerrotation jedoch über den Radius der Hohlflügel unterschiedliche Strömungsgeschwindigkeiten und damit auch unterschiedliche Druckverhältnisse. Dadurch sind dieses Verfahren und die zugehörige Vorrichtung nicht geeignet, zum Verdampfen Flüssigkeiten aus einem Flüssigkeitsgemisch einzusetzen, die einen höheren (oder auch niedrigeren) Dampfdruck als die anderen Komponenten haben.

Der Erfindung liegt die Aufgabe zugrunde, ein Verfahren der eingangs genannten Art und eine zugehörige Vorrichtung so auszubilden, dass sie zum Verdampfen von Flüssigkeiten aus dem Flüssigkeitsgemisch, unter Erzielung eines grösseren Wirkungsgrades als bisher bekannte, einschlägige Verfahren und Vorrichtungen, geeignet sind.

Die gestellte Aufgabe wird mit dem eingangs genannten Verfahren erfindungsgemäss dadurch gelöst, dass zum Verdampfen von Flüssigkeiten aus dem Flüssigkeitsgemisch im Flüssigkeitsgemisch mindestens ein von einer dünnen Gasschicht ummantelter Treibstrahl ausgebildet und so stark bewegt wird, dass die dünne Gasschicht durch die an den Grenzschichten der Flüssigkeitsbereiche entstehende Reibung in feinste Unterdruckbläschen in die Grenzschichten verteilt wird. Für die reibungsverursachende Relativbewegung zwischen dem Triebstrahl und dem übrigen Flüssigkeitsgemisch kann das Flüssigkeitsgemisch selbst unbewegt bleiben oder aber in eine Bewegung gebracht werden, die der Treibstrahlrichtung entgegengesetzt ist. Die vielen kleinen Unterdruckbläschen ergeben zusammen eine sehr grosse, mit dem Flüssigkeitsgemisch in Berührung stehende Aufnahmefläche, und es lässt sich nachweislich ein wesentlich vergrösserter Entzug von relativ leichter verdampfenden Flüssigkeitskomponenten aus einem Flüssigkeitsgemisch erzielen, als dies etwa durch ein Begasen von Flüssikeitsgemischen bewirkt werden kann, mit welchem das vorliegende Verfahren nicht gleichgesetzt werden darf. Die wirksame Unterdruckfläche wird also vervielfacht und gleichzeitig die Abluftmenge gegenüber bekannten Verfahren auf einen Bruchteil gesenkt.

Das Verfahren gemäss der Erfindung lässt sich mittels einer Vorrichtung durchführen, die dadurch gekennzeichnet ist, dass in dem das Flüssigkeitsgemisch enthaltenden Behälter mindestens ein Düsenkörper angeordnet ist, der eine Düsenöffnung zum Austritt eines Treibstrahles des Flüssigkeitsgemisches und um diese Düsenöffnung herum einen mit einem Druckgaskanal verbundenen Düsenspalt aufweist, der auch aus mehreren Einzelspalten oder Düsenbohrungen gebildet sein kann. Vorteilhafterweise ist bei den verwendeten Düsenkörpern mindestens eine Begrenzungswand des Düsenspaltes zur Einstellung der Spaltbreite verstellbar ausgebildet.

Die Wirksamkeit des erfindungsgemäss ausgebildeten Verfahrens kann dadurch erhöht werden, dass bei der Vorrichtung mehrere Düsenkörper in die Behälterwandung so eingesetzt sind, dass in entgegengesetzten Richtungen aneinander vorbeigeführte Treibstrahlen des Flüssigkeitsgemisches auftreten und so die Reibung an den mit einem dünnen Gasmantel versehenen Grenzschichten erhöht wird. Auch die Anordnung von Mitströmungen zum Treibstrahl behindernden Lochwandungen konzentrisch und im Abstand von den gasummantelten Treibstrahlen erhöht bereits durch die Aufrechterhaltung von Geschwindigkeitsdifferenzen in den Grenzflächenbereichen die Wirksamkeit der Vorrichtung. Die Höhe des Pegels des Flüssigkeitsgemisches im Behälter wird zweckmässig in einer Relation zu der Stärke der Treibstrahlen gehalten, um sicherzustellen, dass die in den Unterdruckbläschen aufgenommenen gasförmigen Ausscheidungen auch bis zum Flüssigkeitsspiegel aufsteigen und nicht durch den statischen Druck der Flüssigkeit wieder in das Flüssigkeitsgemisch übergehen. Vorsorglich kann auch oberhalb des Behälters eine Einrichtung zum Abführen der aus der Flüssigkeit austretenden Gase und Dämpfe angeordnet werden. Mit einem erfindungsgemäss ausgebildeten Verfahren unter Einsatz der vorstehend erwähnten Vorrichtungen haben sich erstaunlich gute Ergebnisse beim Entfernen von Lösungsmittelresten, beispielsweise Tetrachloräthylen oder Trichloräthylen, aus Wasser ergeben.

Nachfolgend werden Ausführungsbeispiele erfindungsgemäss ausgebildeter Vorrichtungen anhand der beiliegenden Zeichnung näher erläutert.

Im einzelnen zeigen:

Fig. 1 einen schematischen Querschnitt durch eine Vorrichtung gemäss der Erfindung entlang der Linie I-I in Fig. 1;

Fig. 2 eine Teildraufsicht auf die Vorrichtung nach Fig. 1;

Fig. 3 einen zentralen Querschnitt durch einen Düsenkörper der Vorrichtung;

Fig. 4 eine vergrösserte Darstellung des Teilschnittbereiches IV in Fig. 3;

Fig. 5 einen Querschnitt durch eine abgewandelte Ausführungsform einer Vorrichtung gemäss der Erfindung;

Fig. 6 einen Teilquerschnitt durch ein weiteres Ausführungsbeispiel eines Düsenkörpers für eine Vorrichtung gemäss der Erfindung;

Fig. 7 ein die Wirkung des Verfahrens und der Vorrichtungen erläuterndes Diagramm.

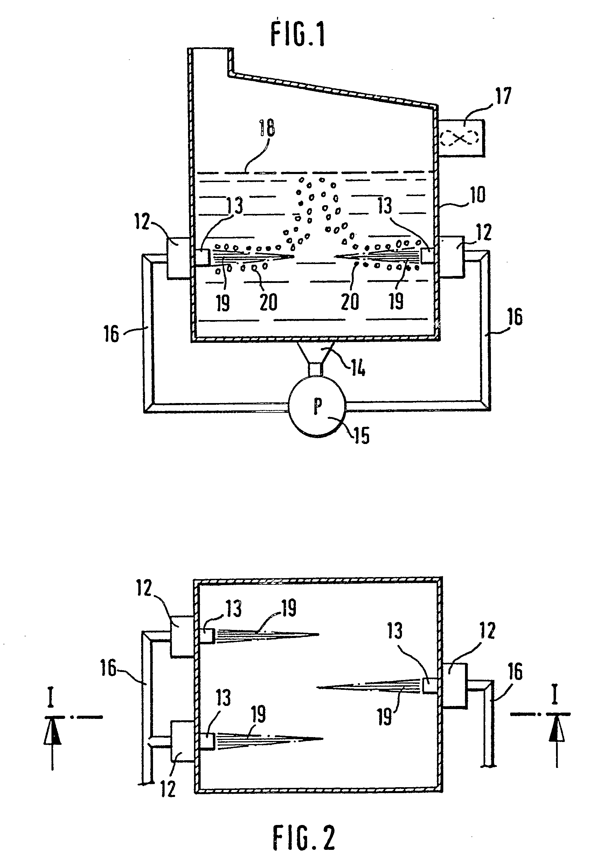

Fig. 1 zeigt einen quaderförmigen, oben offenen Behälter 10 zur Aufnahme des zu behandelnden Flüssigkeitsgemisches 11. Auf den einander gegenüberliegenden Längsseiten des Behälters 10 sind in Abständen Düsenkörper 12 so angeordnet, dass die in den Behälter 10 hineinragenden Düsen 13 der Düsenkörper 12 einer Seite etwas versetzt zu den Düsen 13 der Düsenkörper 12 der anderen Seite sind. Durch eine Entnahmeöffnung 14 am Behälterboden gelangt Flüssigkeitsgemisch aus dem Behälterinnern zu einer Druckpumpe 15, welche das Flüssigkeitsgemisch über Druckleitungen 16 zu den Düsenkörpern 12 fördert. Im Bereich der oberen Behälteröffnung ist am Behälter 10 ein Ventilator 17 befestigt, der einen über den Flüssigkeitsspiegel 18 im Behälter 10 hinwegstreichenden Luftstrom bildet. Die freiwerdenden Gase könnten aber auch durch Absaugen entfernt werden.

Aus den Düsen 13 der Düsenkörper 12 wird das durch die Druckpumpe 15 geförderte Flüssigkeitsgemisch in einem turbulenten Treibstrahl in das im Behälter 10 stehende Flüssigkeitsgemisch eingegeben. Der Treibstrahl 19 jeder Düse ist von einem dünnen Gasmantel umgeben, der durch die zwischen dem Treibstrahl 19 und der umgebenden, stehenden Flüssigkeit auftretende Reibung in eine Vielzahl kleiner Gasbläschen 20 aufgelöst wird, die zum Flüssigkeitsspiegel 18 nach oben steigen. Dort wird das in den Bläschen enthaltene eingegebene Gas und das aus dem Flüssigkeitsgemisch gelöste und von den Gasbläschen aufgenommene Gas freigegeben und durch den vom Ventilator 17 gebildeten Luftstrom abgeführt.

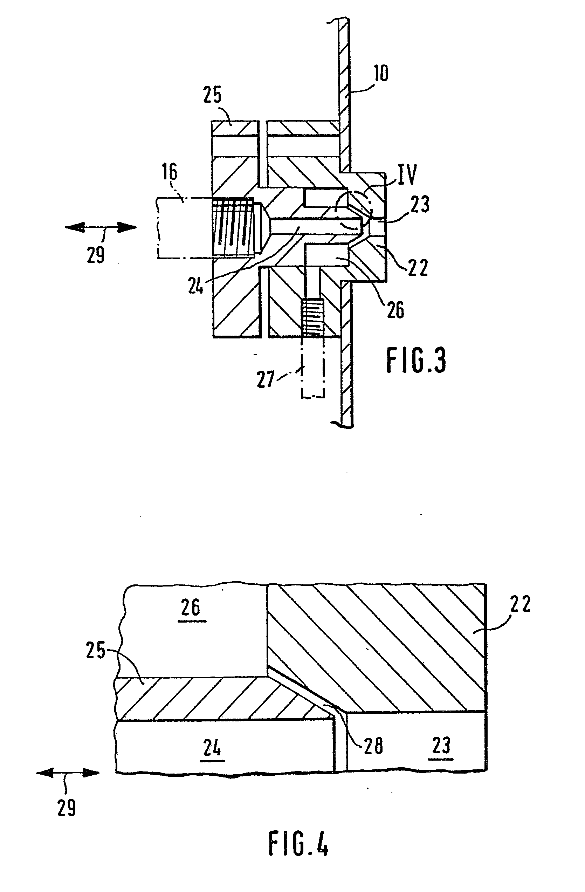

Fig. 3 zeigt einen Querschnitt durch einen Düsenkörper 12. Er weist einen durch eine Öffnung in der Seitenwandung des Behälters 10 hindurchragenden Düsenkopf 22 mit einer zentralen Düsenöffnung 23 am Ende eines mit einer der Druckleitungen 16 verbundenen Flüssigkeits-Durchgangskanales 24 auf. Der Durchgangskanal 24 ist in einem konzentrisch im Düsenkopf 22 längsverschiebbar gelagerten Einsatzkörper 25 ausgebildet, der zusammen mit dem Düsenkopf 22 einen Ringraum 26 begrenzt, in welchem eine Druckluftleitung 27 endet, die an eine nicht dargestellte Druckluftquelle angeschlossen ist. Wie am besten aus Fig. 4 ersichtlich ist, bildet der Einsatzkörper 25 mit dem Düsenkopf 22 einen kegelmantelartigen Ringspalt 28, der vom Ringraum 26 in die Düsenöffnung 23 führt und durch welchen die Druckluft zur Bildung der Gasummantelung des

Treibstrahles 19 geleitet wird. Durch die Längsverstellung des Einsatzkörpers 25 in Richtung der in Fig. 3 und 4 eingezeichneten Doppelpfeile 29 lässt sich die Breite dieses Ringspaltes 28 einstellen und dadurch die Stärke des Gasmantels des Treibstrahles in Anpassung an die Konsistenz der zu behandelnden Flüssigkeitsmischung einstellen.

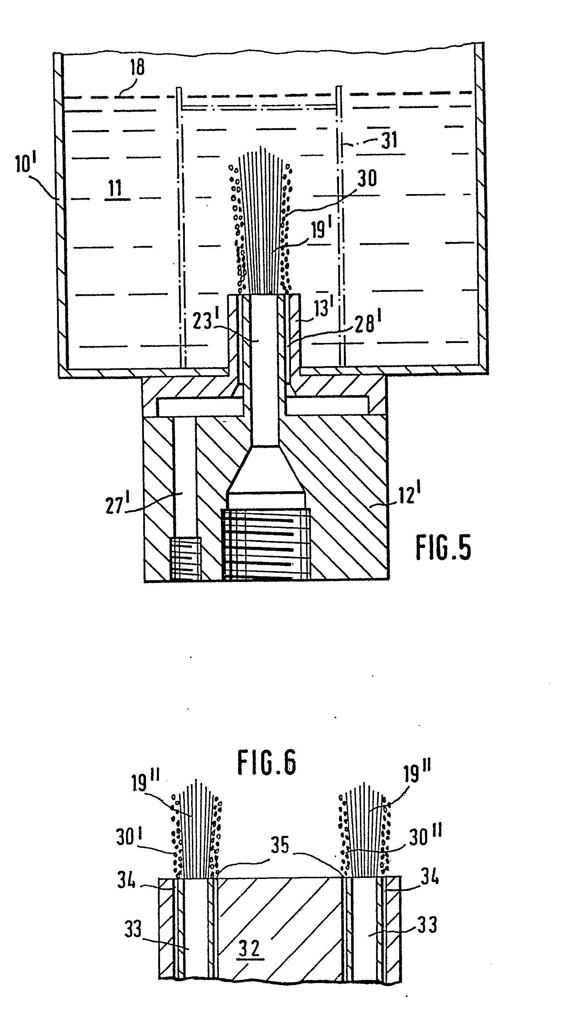

Fig. 5 zeigt einen Querschnitt durch eine Vorrichtung, bei welcher in einen kreiszylindrischen Behälter 10' für das Flüssigkeitsgemisch im Boden eine einzige Düse 13' mit dem zugehörigen Düsenkörper 12' zentral eingesetzt ist. Die Düse 13' weist einen unveränderlichen Ringspalt 28' für die über einen Anschluss 27' am Düsenkörper 12' zugeleitete, den sich in feine Unterdruckbläschen auflösenden Gasmantel 30 des Treibstrahles 19' bildende Druckluft auf. Der Treibstrahl 19' tritt durch die Düsenöffnung 23' aus. Um die Düse 13' herum ist konzentrisch zu ihr und zu dem gebildeten Treibstrahl 19' im Innern des Behälters 10' ein aus Lochblech gebildeter Korb 31 angeordnet, durch welchen die Ausbildung einer Zirkularströmung im Behälter 10', welche die Strömungsreibung an der Grenzfläche des Treibstrahles 19' vermindern könnte, verhindert wird.

Fig. 6 zeigt einen Teilquerschnitt durch einen Düsenkopf 32, der eine ringförmige Düsenöffnung 33 zur Ausbildung eines ringförmigen Treibstrahles 19'' aufweist. Die ringförmige Düsenöffnung 33 ist von zwei konzentrischen Düsenspalten 34 und 35 umgeben, aus welchen die Luft zur Bildung der ringförmigen Gasummantelungen 30' und 30'' austritt. Es sind auch andere Düsenkörper denkbar, beispielsweise Düsenleisten mit geradlinigen schlitzförmigen Düsenöffnungen und parallel dazu verlaufenden Schlitzen zur Bildung der Gasummantelung des Treibstrahles.

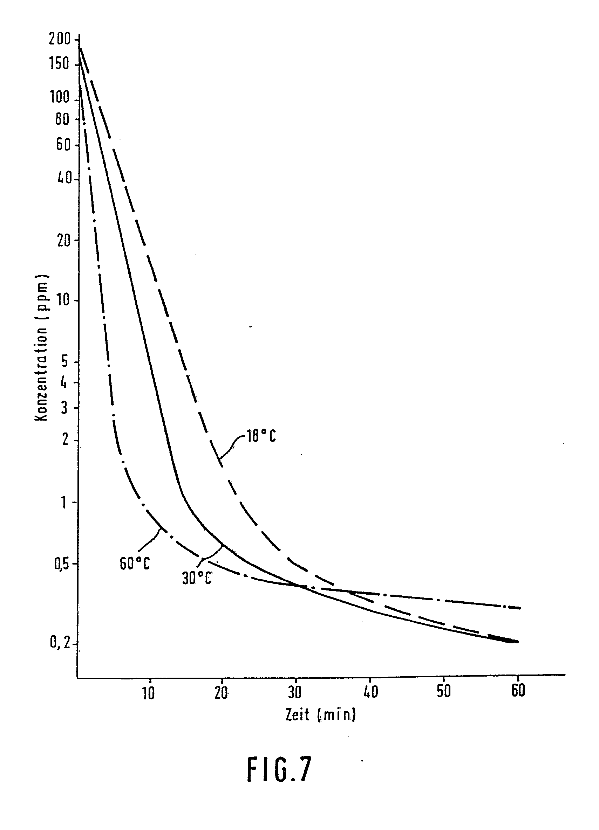

Das Diagramm nach Fig. 7 zeigt die Wirkung der als Treibstrahl-Grenzschichtverdampfer bezeichenbaren Vorrichtung gemäss der Erfindung, eingesetzt zum Verdampfen von Tetrachloräthylen als Flüssigkeitskomponente aus Wasser. In der nachfolgenden Tabelle ist die Abnahme der Konzentration des Tetrachloräthylens bei drei verschiedenen Temperaturwerten von 18, 30 und 60°C mit zunehmender Treibstrahlbehandlungszeit aufgezeichnet. Die Tabellenwerte sind in dem Diagramm nach Fig. 7 als drei Kurven eingezeichnet, wobei die Abszisse die Zeit in Minuten und die Ordinate die Lösungsmittelkonzentration in Parts per million im logarithmischen Massstab anzeigt. Die Kurven zeigen dass beim Verfahren gemäss der Erfindung die Wirkung nicht durch die an sich günstige Änderung des Dampfdruckes bei steigender Temperatur, sondern durch die mit dem Verfahren bewirkte Grenzschichtverdampfung erreicht wird, da das günstigste Ergebnis, nämlich die höchste Konzentrationsabnahme bei der relativ niedrigen Temperatur von 18°C erreicht wird, wie der asymptotische Verlauf der 18°C-Kurve an ihrem Ende nach 60 min Treibstrahleinwirkung erkennen lässt.

*Tetrachloräthylen (Per) in Wasser*

| Zeit (min) | Konzen- tration 18° C | Konzen- tration 30° C | Konzen- tration 60° C |
|---|---|---|---|
| 0 | 185 | 164 | 138 |
| 5 | 55 | 32 | 2,5 |
| 10 | 16,5 | 4,0 | 0,9 |
| 15 | 4,0 | 1,0 | 0,7 |
| 30 | 0,5 | 0,4 | 0,4 |
| 60 | 0,2 | 0,2 | 0,3 |

**Patentansprüche**

1. Verfahren zum Einbringen eines Gases in ein Flüssigkeitsgemisch unter Bildung von durch eine Gasschicht voneinander getrennter bewegter Flüssigkeitsbereichen, dadurch gekennzeichnet, dass zum Verdampfen von Flüssigkeiten aus den Flüssigkeitsgemisch im Flüssigkeitsgemisch mindestens ein von einer dünnen Gasschicht ummantelter Treibstrahl (19) ausgebildet und so stark bewegt wird, dass die dünne Gasschicht durch die an den Grenzschichten der Flüssigkeitsbereiche entstehende Reibung in feinste Unterdruckbläschen (20) in die Grenzschichten verteilt wird.

2. Vorrichtung zur Durchführung des Verfahrens nach Anspruch 1, dadurch gekennzeichnet, dass sie einen Behälter (10, 10') für das Flüssigkeitsgemisch (11) aufweist, in welchem mindestens ein Düsenkörper (12, 12') angeordnet ist, der eine Düsenöffnung (23, 23') zum Austritt eines Treibstrahles (19, 19') des Flüssigkeitsgemisches und um diese Düsenöffnung (23, 23') herum einen mit einem Druckgaskanal (27, 27') verbundenen Düsenspalt (28, 28') aufweist.

3. Vorrichtung nach Anspruch 2, dadurch gekennzeichnet, dass der Düsenspalt aus mehreren Einzelspalten oder Düsenbohrungen gebildet ist.

4. Vorrichtung nach Anspruch 2, dadurch gekennzeichnet, dass mindestens eine Begrenzungswandung (Einsatzkörper 25) des Düsenspaltes (28) zur Einstellung der Spaltbreite verstellbar ausgebildet ist.

5. Vorrichtung nach einem der Ansprüche 2 bis 4, dadurch gekennzeichnet, dass in die Behälterwandung (10) mehrere Düsenkörper (12) so eingesetzt sind, dass in entgegengesetzten Richtungen aneinander vorbeigeführte Treibstrahlen (19) des Flüssigkeitsgemisches (11) auftreten.

6. Vorrichtung nach einem der Ansprüche 2 bis 5, dadurch gekennzeichnet, dass im Behälter (10, 10') konzentrisch und mit Abstand von den gasummantelten Treibstrahlen (19, 19') Mitströmungen zum Treibstrahl (19, 19') behindernde Lochwandungen (31) angeordnet sind.

7. Vorrichtung nach einem der Ansprüche 2 bis 6, dadurch gekennzeichnet, dass die Höhe des Flüssigkeitsgemisches (11) im Behälter (10, 10') dahingehend begrenzt ist, dass der unvermischte Kern von vom Behälterboden nach oben gerichteten Treibstrahlen (19, 19') bis dicht unterhalb des Flüssigkeitsspiegels (18) reicht.

8. Vorrichtung nach einem der Ansprüche 2 bis 7, dadurch gekennzeichnet, dass oberhalb des Behälters (10, 10') eine Einrichtung (Ventilator 17) zum Abführen der aus der Flüssigkeit austretenden Gase und Dämpfe angeordnet ist.

9. Vorrichtung nach Anspruch 8, dadurch gekennzeichnet, dass die Einrichtung zum Abführen der Gase und Dämpfe mindestens einen Ventilator (17) zur Bildung eines über den Flüssigkeitsspiegel hinwegstreichenden Luftstromes aufweist.

**Claims**

1. A method of introducing a gas into a liquid mixture with the formation of moving liquid regions which are separated from one another by a gas layer, characterised in that, for the evaporation of liquids out of the liquid mixture, at least one driving jet (19), sheathed by a thin gas layer, is formed in the liquid mixture and is so severely moved that, as a result of the friction arising at the boundary layers of the liquid regions, the thin gas layer is distributed into the boundary layers as very fine small bubbles (20) underpressure.

2. Apparatus for carrying out the method according to Claim 1, characterised in that it comprises a container (10, 10') for the liquid mixture (11), in which is arranged at least one nozzle body (12, 12') which has a nozzle aperture (23, 23') for the exit of a driving jet (19, 19') of the liquid mixture and, around this nozzle aperture (23, 23'), a nozzle gap (28, 28') which is connected to a pressure gas duct (27, 27').

3. Apparatus according to Claim 2, characterised in that the nozzle gap is formed from several individual gaps or nozzle bores.

4. Apparatus according to Claim 2, characterised in that at least one boundary wall (insert body 25) of the nozzle gap (28) is designed so as to be adjustable for setting the gap width.

5. Apparatus according to one of Claims 2 to 4, characterised in that several nozzle bodies (12) are so inserted into the container wall (10) that driving jets (19) of the liquid mixture (11), which are conducted past one another in opposite directions, occur.

6. Apparatus according to one of Claims 2 to 5, characterised in that perforated walls (31), which hinder entrainment relative to the driving jet (19, 19'), are arranged in the container (10, 10') concentrically and at a spacing from the gas-sheathed driving jets (19, 19').

7. Apparatus according to one of claims 2 to 6, characterised in that the height of the liquid mixture (11) in the container (10, 10') is limited to the extent that the unmixed core of the driving jets (19, 19') directed upwardly from the container base reaches to close beneath the liquid level (18).

8. Apparatus according to one of Claims 2 to 7, characterised in that a mechanism (ventilator 17) for carrying off the gases and vapours emerging from the liquid is arranged above the container (10, 10').

9. Apparatus according to Claim 8, characterised in that the mechanism for carrying off the gases and vapours has at least one ventilator (17) for the creation of an air flow sweeping across the liquid level.

**Revendications**

1. Procédé pour introduire un gaz dans un mélange de liquide en formant des zones de liquide agitées et séparées l'une de l'autre par une couche de gaz, caractérisé en ce que, pour vaporiser des liquides provenant du mélange de liquide, il est prévu dans le mélange de liquide au moins un jet de propulsion (19) entouré d'une mince couche de gaz, ce jet de propulsion étant agité de manière que la mince couche de gaz soit répartie en minuscules bulles de dépression (20) dans les interfaces par le frottement produit au niveau des interfaces des zones de liquide.

2. Dispositif permettant de réaliser le procédé conforme à la revendication 1, caractérisé en ce qu'il comprend une cuve (10, 10') destinée au mélange de liquide (11) dans laquelle est prévu au moins un corps d'injection (12, 12') comportant une ouverture d'injection (23, 23') livrant passage à un jet de propulsion (19, 19') du mélange de liquide et comportant, autour de ladite ouverture (23, 23'), un interstice d'injection (28, 28') relié à un canal de gaz comprimé (27, 27').

3. Dispositif conforme à la revendication 2, caractérisé en ce que l'interstice d'injection est constitué de plusieurs interstices individuels ou de perçages d'injection.

4. Dispositif conforme à la revendication 2, caractérisé en ce qu'au moins une paroi de délimitation (corps rapporté 25) de l'interstice d'injection (28) est réglable pour modifier la largeur de l'interstice.

5. Dispositif conforme à l'une des revendications 2 à 4, caractérisé en ce que, dans la paroi de cuve (10), sont implantés plusieurs corps d'injection (12) de manière à produire des jets de propulsion (19) du mélange de liquide (11) dans des directions opposées.

6. Dispositif conforme à l'une des revendications 2 à 5, caractérisé en ce que des parois perforées (31), évitant l'apparition de courants secondaires au jet de propulsion (19, 19') et disposées concentriquement et à distance des jets de propulsion (19, 19') entourés de gaz, sont prévues dans la cuve (10, 10').

7. Dispositif conforme à l'une des revendications 2 à 6, caractérisé en ce que la hauteur du mélange de liquide (11) dans la cuve (10, 10') est limitée pour que le cœur non mélangé des jets de propulsion (19, 19') dirigés vers le haut parvienne juste en dessous du niveau du liquide (18).

8. Dispositif conforme à l'une des revendications 2 à 7, caractérisé en ce qu'au-dessus de la cuve (10, 10') est prévu un système (ventilateur 17) permettant d'évacuer les gaz et les vapeurs sortant du liquide.

9. Dispositif conforme à la revendication 8, caractérisé en ce que le système permettant d'évacuer les gaz et les vapeurs comporte au moins un ventilateur (17) pour former un courant d'air passant au-dessus de la surface du liquide.

## FIG.1

## FIG.2

FIG.3

FIG.4

FIG.5

FIG.6

FIG.7